# EUROPEAN PATENT SPECIFICATION

(11) **EP 3 699 468 B1**
(45) Date of publication and mention of the grant of the patent: **03.09.2025**
(21) Application number: 20156659.3
(22) Date of filing: 11.02.2020
(51) Int. Cl.: F16L 5/00, B60H 1/32, B60R 13/07, B62D 25/24, F16L 41/08, F16L 33/30

(54) **FLUID DRAIN CONNECTOR AND ATTACHING METHOD THEREOF**
FLÜSSIGKEITSABLASSVERBINDER UND VERFAHREN ZUR BEFESTIGUNG DAFÜR
CONNECTEUR DE PURGE DE FLUIDE ET SON PROCÉDÉ DE FIXATION

(30) Priority: 19.02.2019 GB 201902232
(43) Date of publication of application: 26.08.2020
(73) Proprietor: Jaguar Land Rover Limited, Coventry, Warwickshire CV3 4LF (GB)
(72) Inventor: WHITCOMBE, Sarah, Coventry, Warwickshire CV3 4LF (GB)
(74) Representative: Jaguar Land Rover Patents Department

(56) References cited:
- EP-A1- 1 319 451
- EP-A1- 2 845 680
- EP-A1- 3 073 131
- DE-C1- 3 835 017
- GB-A- 2 312 029
- US-A- 3 984 132
- US-A- 5 213 378
- US-A1- 2015 091 296
- US-B1- 9 435 453

## Description

### TECHNICAL FIELD

This invention relates generally to connectors, and more particularly connectors for vehicles. More specifically, although not exclusively, this invention relates to fluid drain connectors for vehicles and methods of installation thereof. Aspects of the invention relate to a fluid drain connector, a vehicle body panel, a vehicle drain assembly, a vehicle and to a method.

### BACKGROUND

Fluid connectors are often installed throughout vehicles to provide fluid communication between components and different areas. One particular use of fluid connectors is in drainage assemblies, for example located within a sunroof recess of a vehicle to prevent the accumulation of fluid.

Such fluid connectors are typically connected to a hole in a vehicle body panel and a hose or conduit is then connected to the fluid connector. The hole is located within a low point of a recess to facilitate the drainage of fluid.

Fluid connectors are often connected to vehicle body panels by welding or brazing. Such methods of installation are time consuming and complex, adding to the overall cost of vehicle manufacture. It is most often the case that such fluid connectors must be installed manually to the vehicle body structure.

In some cases, the fluid connectors include a plurality of parts, for example, a first, housing part arranged to be connected to the vehicle body panel and a second, connector part arranged to be connected to the first, housing part. A hose or conduit must then be connected to the second, connector part. It has been found that such multi-part connectors add weight, cost and complexity to the fluid connector. Further, as a result of the method of attachment and/or the complexity of the fluid connector itself, the assembly process cost is increased and fluid-tightness/fluid-proofing/impermeability or integrity of seal of the joint/connection between the fluid connector and vehicle body panel is often compromised.

It is therefore an object of embodiments of the invention to at least mitigate one or more of the problems of the prior art.

DE3835017C1 discloses a water drainage pipe designed as a die-cast piece that is connected to a metal frame of a vehicle sunroof by caulking one end of the water drainage pipe which is inserted through the frame opening, and introducing an adhesive between the outer circumference of the water drainage pipe and the inner circumference of the frame opening.

US2015091296 discloses a bulkhead fitting in which breakaway torque required to rotate the fitting body relative to a bulkhead after assembly of the fitting body and nut is significantly greater than the body and nut assembly torque.

FR3005971 discloses a water pipe connecting member and a method of mounting such member through a wall. The connection element, formed by a plate and first and second parts, is preassembled forming a unitary assembly before it is introduced into the wall.

### SUMMARY OF THE INVENTION

Aspects of the invention relate to a fluid drain connector, a vehicle body panel, a vehicle drain assembly, a vehicle and to a method, as defined in the appended claims.

According to an aspect of the invention, there is provided a fluid drain connector for a vehicle, the fluid drain connector comprising a flange portion having a clinching element to a first side thereof and a hose connector extending from a second side thereof, the fluid drain connector having a generally tubular body, wherein the clinching element comprises a deformable region arranged to plastically deform outwardly under the influence of force so as to clinch a portion of a vehicle body panel between the flange portion and clinching element; wherein the fluid drain connector comprises one or more anti-rotation lock features on an external surface of the clinching element or on a panel facing side of the flange, the one or more anti-rotation lock features arranged to engage a vehicle body panel.

In this context, clinching is a forming process whereby the flange of the drain connector is held against one side of the body panel with the clinching element protruding through the opening in the body panel, either the clinching element, the body panel or both are plastically formed in order to retain the drain connector to the body panel. A first method of clinching is as follows; while the flange is held in place, a force is applied to plastically deform the clinching element outwardly. This results in the clinching element forming a second flange on the opposite side of the body panel from the first flange and the body panel is clinched between the two flanges. By clinching in this manner the extension of the clinching element through the body panel after forming is minimised. It is also possible to simultaneously form the body panel or preform the body panel into a chamfered aperture so that the finished fluid drain connector is flush with the surface of the body panel opposite to the first flange. This has the technical advantage that a drain can be provided to remove water from a horizontal surface without pooling. Such a horizontal surface may be present in the surround to a sunroof aperture.

Providing a fluid drain connector having a clinching element allows for quick and effective attachment to a vehicle panel. Such attachment can be affected concurrently with stamping or pressing of the vehicle panel. Further, the clinching element can provide a fluid-tight seal between the fluid drain connector and vehicle body panel. This can be achieved without any additional components or materials, for example washers or sealing compounds, the effect of which is an improvement in the simplicity and reliability of the fluid drain connector.

The hose connector may comprise a spigot. The hose connector may comprise a push-fit connector, for example a male or female push-fit connector. The hose connector may comprise a hose-tail type connector. The hose connector may comprise a flared end or tapered end.

Advantageously, a push fit connector allows for easy installation of a hose or other conduit on the fluid drain connector. Combined with the clinching element described above, such features act in concert to allow for a reliable fluid assembly, for example a drain assembly, due to the absence of multiple components.

The flared or tapered end may comprise a first tapered surface. The first tapered surface may taper in the direction of the flange. The flared or tapered end may comprise a second tapered surface. The second tapered surface may extend from the first tapered surface. The second tapered surface may taper in the opposite direction to that of the first tapered surface. The first tapered surface may have a shallower taper profile than the second tapered surface.

Additionally or alternatively, the hose connector, push-fit connector or hose-tail connector may comprise one or more barbs. The hose connector may comprise a spigot.

The clinching element may comprise a clinch ring. The clinch ring may be arranged to be inserted into or within a hole or opening of a vehicle body panel. The clinch ring, or at least a portion thereof, may be arranged to be deformed or clinched towards the flange, for example such that a portion of the vehicle body panel is captivated therebetween.

Captivating a portion of vehicle body panel between the clinch ring and flange may provide a water-tight or fluid-tight seal therebetween, without requiring any further components or materials, thereby improving the simplicity and reliability of the fluid drain connector when installed in a fluid assembly or an area requiring efficient and effective drainage.

The clinching element or clinch ring may be arranged to engage behind the rim of the opening in the vehicle body panel. The clinching element or clinch ring may be arranged to provide a watertight fit or seal between the fluid drain connector and the vehicle body panel.

In this context a clinch ring is a feature of the clinching element to provide a second method of clinching the drain tube to the body panel. The clinch ring may be a serrated diameter or a plain diameter forming a step between the clinching element and the flange. It is normally associated with an undercut formed in the outer diameter of the clinching element. During assembly the clinching element is inserted through the vehicle body aperture and the clinch ring comes into contact with the body panel. Application of a force pushes the clinch ring into the body material and plastically deforms a small amount of the body material into the undercut until the flange makes contact with the body surface. The formed body material connects the drain connector to the body panel in a similar manner to a self-clinching nut. This method of clinching is appropriate for a soft body material and if the clinching element is sufficiently short that it does not extend beyond the body panel surface then the drain tube has the technical benefit of providing a drain tube connector for a horizontal body panel which does not allow pooling of fluid above the body surface.

In embodiments, the clinch ring comprises press-in element, for example arranged to deform under the influence of a pressing force. Such a feature allows for the installation of the fluid drain connector concurrently with the stamping or pressing of a vehicle body panel.

The fluid drain connector may comprise a tubular shaft. The tubular shaft may extend between the hose connector and flange. In embodiments, the hose connector is formed on an end, for example a free end, of the tubular shaft. The tubular shaft may comprise a substantially constant or uniform wall thickness along at least a portion of its length. The wall thickness of the tubular shaft may be greater than a wall thickness of the clinch ring.

In embodiments, the one or more anti-rotation lock features comprise substantially axially or longitudinally extending ribs or notches. The ribs or notches may be arranged to engage inside the rim of an opening in a vehicle body panel. The external surface of the clinch ring may comprise six anti-rotation lock features, for example evenly distributed therearound. One or more, for example each, of the anti-rotation lock features may comprise serrations or teeth.

One or more anti-rotation lock features may be located on a panel facing side of the flange. The one or more anti-rotation lock features may be arranged to engage a vehicle body panel, for example behind a rim of an opening therein.

The one or more anti-rotation lock features may comprise substantially radially extending ribs or notches. The ribs or notches may be arranged to engage behind the rim of an opening in a vehicle panel. The panel facing side of the flange may comprise six anti-rotation lock features, for example evenly distributed therearound. One or more of the anti-rotation lock features may comprise a rib tapered away from a longitudinal axis of the fluid drain connector. One or more, for example each, of the anti-rotation lock features may comprise serrations or teeth.

In embodiments, the anti-rotation lock features on the clinch ring may be located intermediate, for example circumferentially intermediate, of the anti-rotation lock features of the panel facing side of the flange.

In embodiments, the one or more anti-rotation lock features may comprise one or more ribs or notches for engaging a cooperating portion of a vehicle body panel. The one or more ribs or notches may be arranged so as to resist relative rotation between the fluid drain connector and vehicle body panel.

At least a portion of a panel facing side of the flange may comprise an annular recess. The annular recess may circumscribe, surround and/or be adjacent the clinching element. The annular recess may describe an undercut. The annular recess may be located at a join or joint between the flange and the clinching element. The clinching element may be arranged to deform part of the vehicle body panel into the undercut.

An undercut allows for a flush finish on a side of the vehicle panel to which the fluid drain connector is connected. A flush finish is advantageous in terms of packaging requirements, the fluid drain connector requiring less space on one side of the vehicle body panel when secured thereto. Further, a flush finish also allows substantially all fluid that accumulates in the vicinity of the fluid drain connector to drain therethrough.

In embodiments, the fluid drain connector or generally tubular body is integrally formed. In embodiments, the flange portion, clinching element and hose connector are integrally formed.

Forming elements of the fluid drain connector integrally provides a fluid drain connector in which a reliable seal can be provided, both between the fluid drain connector and a vehicle body panel and between the fluid drain connector and a hose, without the need for additional components or materials, for example washers, clamps or sealing compounds.

The fluid drain connector may comprise or be formed from metal, for example aluminium or steel.

In some embodiments, the clinching element comprises a self-clinch fastener or self-clinch element.

In embodiments, the generally tubular body may comprise a pair of concentric tubes. The clinching element may comprise a rivet-nut or rivet-nut type feature. The internal bore may comprise a thread, for example for engagement with a tool for deforming the clinching element.

The hose connector or a flared or tapered end thereof may have a length between 4.0mm and 8.0mm, for example between 5.0mm and 7.0mm or 6.0mm.

The first tapered surface may have an axial extent or length (hereinafter length) of between 4.0mm and 6.0mm. The second tapered surface may have a length of between 1.0mm and 4.0mm. The first tapered surface may have a length of 5.0mm and the second tapered surface may have a length of 1.0mm.

The first tapered surface and second tapered surface may have a maximum outer diameter of between 10.0mm and 14.0mm, for example between 11.0mm and 13.0mm. The first tapered surface and second tapered surface may have a maximum outer diameter of 12.0mm.

In embodiments, an internal bore or interior surface of the generally tubular body may be smooth or absent any surface features. The internal bore of the generally tubular body may be between 6.0mm and 9.0mm, for example between 6.5mm and 8.5mm, between 7.0mm and 8.0mm.

In embodiments, the clinch ring may have an axial extent or length, e.g. a wall height, of between 1.0mm and 4.0mm. The wall height may be between 1.5mm and 3.5mm, for example between 2.0mm and 3.0mm.

The clinch ring may have a wall thickness of between 0.5mm and 2.5mm, for example between 1.0mm and 2.0mm.

The clinch ring may have an outer diameter between 8.0mm and 12.0mm, for example between 9.0mm and 11.0mm, between 9.0mm and 10.0mm. The clinch ring may have an outer diameter between 9.5mm and 9.9mm.

The fluid drain connector may comprise a fillet between the tubular shaft and flange. The fillet may have a radius of between 2.0mm and 6.0mm, for example between 3.0mm and 5.0mm. The fillet may have a radius of 3.0mm.

The wall thickness of the tubular shaft may be between 0.5mm and 2.5mm, for example between 1.0mm and 2.0mm, between 1.2mm and 1.8mm or 1.4mm and 1.6mm.

The tubular shaft may have a length between 16.0mm and 25.0mm, for example between 17.0mm and 24.0mm, between 18.0mm and 23.0mm or between 19.0mm and 22.0mm.

The tubular shaft may have an outer diameter between 8.0mm and 12.0mm, for example between 9.0mm and 11.0mm.

The hose connector may have an opening which is between 3mm and 15mm in diameter.

In embodiments, a panel facing side of the flange may be tapered towards a longitudinal axis of the generally tubular body, so as to describe the undercut. The flange may have an outer diameter between 16.0mm and 20.0mm, for example between 17.0mm and 19.0mm. The flange may have an outer diameter between 17.6mm and 18.1mm.

The flange may comprise a rim having a depth between 2.0mm and 5.0mm, for example between 3.0mm and 4.0mm. The rim may have a depth between 3.0mm and 3.8mm.

According to a further aspect of the invention, there is provided a vehicle body panel comprising a fluid drain connector as described above.

In embodiments, the clinching element lies substantially flush with a surface of the vehicle body panel when the fluid drain connector is attached thereto.

In embodiments, the fluid drain connector and vehicle body panel form or describe a fluid-tight or water-tight seal therebetween. The fluid drain connector and vehicle body panel may form or describe an impervious or impermeable joint/connection/seal therebetween.

According to another aspect of the invention, there is provided a vehicle comprising a fluid drain connector as described above or a vehicle body panel as described above.

According to yet another aspect of the invention there is provided a vehicle drain assembly comprising one or more fluid drain connectors as described above.

According to another aspect of the invention, there is provided a method of attaching a fluid drain connector to a vehicle body panel, the fluid drain connector comprising a flange portion having a clinching element to a first side thereof and a hose connector extending from a second side thereof, the fluid drain connector having a generally tubular body, wherein the clinching element comprises a deformable region arranged to plastically deform outwardly under the influence of force so as to clinch a portion of a vehicle body panel between the flange portion and clinching element, characterised in that the fluid drain connector comprises one or more anti-rotation lock features on an external surface of the clinching element or on a panel facing side of the flange, the one or more anti-rotation lock features arranged to engage a vehicle body panel; the method comprising inserting the clinching element through an opening in the vehicle body panel, applying a pressing force to the fluid drain connector so as to plastically deform the clinching element towards the flange such that a portion of the vehicle body panel is captivated between the flange and the clinching element.

The method may comprise stamping or pressing the vehicle body panel and applying a pressing force to the fluid drain connector concurrently.

Deforming the clinching element may comprise at least partially embedding the clinching element within the vehicle body panel such that the clinching element lies substantially flush with a surface of the vehicle body panel.

In the above aspects and embodiments, the term clinching element may be alternatively referred to as a clinching fastener.

Within the scope of this invention it is expressly intended that the various aspects, embodiments, examples and alternatives set out in the preceding paragraphs, in the claims and/or in the following description and drawings, and in particular the individual features thereof, may be taken independently or in any combination within the scope of the claims. That is, all embodiments and/or features of any embodiment can be combined in any way and/or combination within the scope of the claims, unless such features are incompatible.

### BRIEF DESCRIPTION OF THE DRAWINGS

Embodiments of the invention will now be described by way of example only with reference to the accompanying drawings in which:
Figure 1 shows a side view of a fluid drain connector according to an embodiment of the invention;
Figure 2 shows an end view of the fluid drain connector of Figure 1;
Figure 3 shows a part-sectional view of the fluid drain connector of Figures 1 & 2; and
Figure 4 shows a vehicle in accordance with embodiments of the invention.

### DETAILED DESCRIPTION

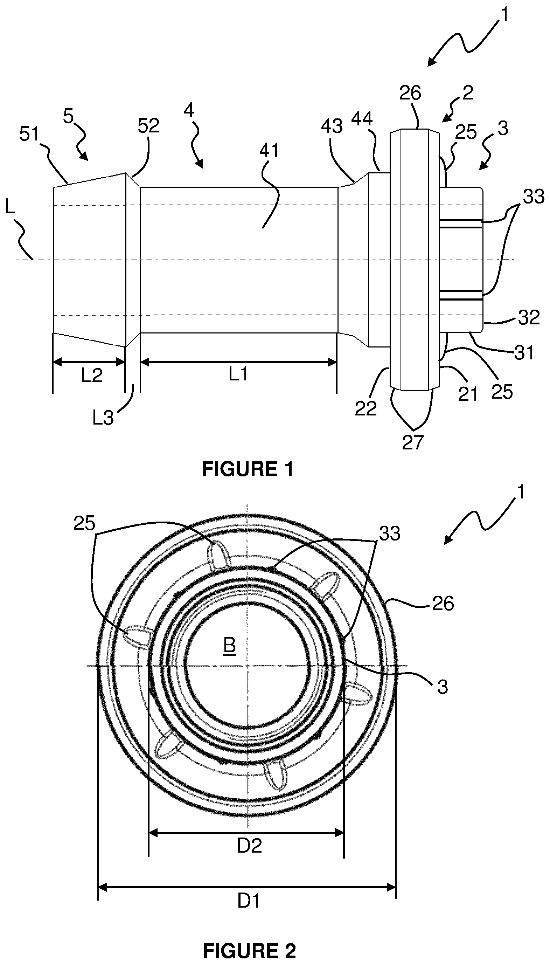

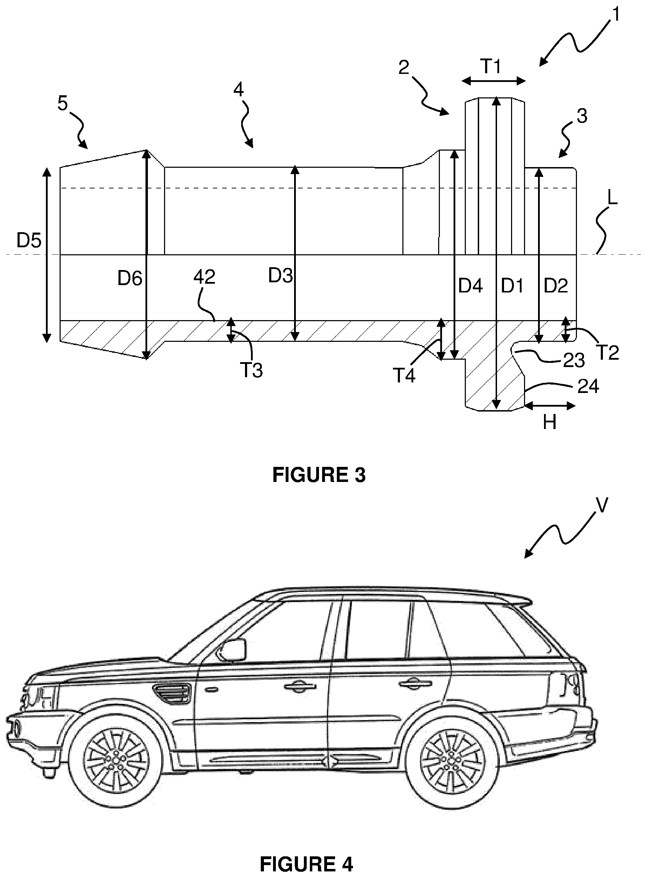

Referring now to Figures 1 to 3, there is shown a fluid drain connector 1, the fluid drain connector 1 being a fluid drain connector for a vehicle V (Figure 4) in this embodiment.

The fluid drain connector 1 incudes a generally tubular body with a bore B extending therealong. The body of the fluid drain connector 1 has a flange 2, a clinching element 3 extending from a first, panel facing, side 21 of the flange 2, a tubular shaft 4 extending from a second side 22 of the flange 2 and a hose connector 5 formed on an end of the tubular shaft 4 and arranged to connection of a hose (not shown). The flange 2, clinching element 3, tubular shaft 4 and hose connector 5 are integrally formed.

The flange 2 is located between, and interconnects, the clinching element 3 and tubular shaft 4. The first side 21 includes an annular recess 23 describing an undercut and a planar, annular abutment surface 24 circumscribing the annular recess 23, for abutment against a vehicle body panel. The annular recess 23 is adjacent to and circumscribes the clinching element 3. The second side 22 describes a bracing surface 22 for bracing against a pressing tool, supporting surface or die. The bracing surface 22 is a planar surface in this embodiment.

The first side 21 of the flange 2 is also provided with anti-rotation lock features evenly distributed circumferentially therearound. The anti-rotation lock features are in the form of six radially extending ribs 25 in this embodiment. Each of the radially extending ribs 25 extends from the clinching element 3 towards an outer rim 26 of the flange 2. In the present embodiment, the ribs 25 are tapered, such that they narrow progressively from the recess 23 toward the rim 26, i.e. taper away from a longitudinal axis L of the fluid drain connector 1. The upper and lower outer edges of the rim 26 each have a chamfered edge 27 in this embodiment. The flange 2 has an outer diameter D1 and the rim 26 has a depth T1 in this embodiment.

The clinching element 3 comprises a wall 31 describing a ring in the form of a clinch ring in this embodiment. The clinch ring is arranged to be inserted into an opening in a vehicle body panel (not shown) and deformed outwardly, toward the flange 2, so as to captivate a portion of the vehicle body panel (not shown) between the flange 2, in particular the first side 21 thereof, and the clinching element 3. The clinching element 3 is arranged to provide a fluid tight seal between a vehicle body panel (not shown) and the fluid drain connector 1.

The wall 31 extends from the first side 21 of the flange 2 towards a free end 32. The wall 31 has an outer diameter D2, a wall thickness T2 and a wall height H. In the present embodiment, the wall height H is described between the outer abutment surface 24 of the flange 2 and the free end 32.

The external surface of the wall 31 is provided with anti-rotation lock features 33 evenly distributed circumferentially therearound. The anti-rotation lock features 33 are in the form of six longitudinally extending ribs 33 in this embodiment, extending along the longitudinal axis L of the fluid drain connector 1 and arranged to engage inside the rim of an opening in a vehicle body panel (not shown). Each of the longitudinally extending ribs 33 extends from the first side 21 of the flange 2 to the free end 32 of the wall 31. In the present embodiment, each of the longitudinally extending ribs 33 is located circumferentially intermediate the radially extending ribs 25.

The tubular shaft 4 has a length L1, and a smooth outer surface 41 of uniform outer diameter D3. The tubular shaft 4 has a uniform wall thickness T3 along length L1 and a smooth internal bore 42, i.e. absent surface features.

The tubular shaft 4 connects flange 2 via a fillet 43 that leads to a base ring 44. The base ring 44 has a greater outer diameter D4 and greater wall thickness T4 than the tubular shaft 4. The base ring 44 provides for a degree of structural rigidity at the connection between the flange 2 and tubular shaft 4. The length L1 of the tubular shaft 4 is measured between the fillet 43 and hose connector 5.

In the present embodiment, outer diameter D3 of the tubular shaft 4 is equal to the outer diameter D2 described by the wall 31 of the clinching element 3. The wall thickness T3 of the tubular shaft 4 is equal to the wall thickness T2 of the wall 31.

Although the wall thickness T2 of the clinching element 3 is described as being equal to the wall thickness T3 of the tubular shaft 4, this need not be the case. Instead, the wall thickness T3 of the tubular shaft 4 may be greater than the wall thickness T2 of the clinching element 3. Such a feature may provide a degree of structural rigidity to the tubular shaft 4, for example when the wall 31 of the clinching fastener 3 is being deformed.

The hose connector 5 is formed on an end of the tubular shaft 4 opposite the flange 2. The hose connector 5 is a push-fit connector in the form of a flared end in this embodiment. The flared end is described by a first tapered surface 51 tapering in the direction of the flange 2. The hose connector 5 is also provided with a second tapered surface 52, having an opposing taper to that of the first tapered surface 51 and extending therefrom.

The first tapered surface 51 has an outer diameter D5 at a first end, equal to diameters D2 & D3. The first tapered surface 51 provides an enlargement to the outer diameter of the hose connector 5 to diameter D6 at a second end. The first tapered surface 51 has longitudinal extent L2 described between the first end and second end.

The second tapered surface 52 has an outer diameter D6 at a first end, the first end being the second end of the first tapered surface 51. The second tapered surface 52 meets the outer surface 41 of the tubular shaft 4 at a second end. The second tapered surface 52 provides a reduction to the outer diameter of the hose connector 5 from D6 to D3. The second tapered surface 52 has longitudinal extent L3 described between its first and second end. The longitudinal extent L3 is shorter than longitudinal extent L2 of the first tapered surface 51. Therefore, the first tapered surface 51 has an opposing and shallower taper profile than the second tapered surface 52.

By virtue of the enlargement to the outer diameter of the hose connector 5, the first tapered surface 51 is arranged to provide an interference fit between the hose connector 5 and a hose (not shown) connected thereto.

In the present embodiment, each of the flange 2, clinching element 3, tubular shaft 4 and hose connector 5 describe an internal bore. Each respective internal bore is of equal diameter and together describe bore B extending along the fluid drain connector 1.

In use, the clinching element 3, in particular the wall 31, is inserted into an opening in a vehicle body panel (not shown) until the outer abutment surface 24 of the flange 2 abuts the vehicle body panel (not shown) about the opening, for example behind a rim of the opening.

The wall height H must be chosen such that, with the outer abutment surface 24 abutting the vehicle body panel (not shown), a portion of the wall 31 protrudes from the opening. Such an arrangement allows for engagement of the wall 31 with a portion of a pressing tool (not shown).

In the present embodiment, the second side 22 of the flange 2 is brought into engagement with a pressing tool (not shown) and the clinching element 3, or more specifically the free end 32 of the wall 31, is aligned with a die (not shown). A pressing force is applied to the fluid drain connector 1 via the second side 22 of the flange 2. The pressing force and the shape of the die act in concert to deform the wall 31 towards the first side 21 of the flange 2.

The arrangement allows a pressing force to be applied to the fluid drain connector 1 concurrently with stamping of a vehicle body panel (not shown), for example such that a vehicle body panel (not shown) is stamped and the fluid drain connector 1 attached to the vehicle body panel (not shown) during the same process step.

By virtue of the deformation, a portion of the vehicle body panel (not shown) is captivated between the first side 21 of the flange 2 the wall 31 so as to attach the fluid drain connector 1 thereto. A fluid-tight, water-tight, impervious or impermeable seal is provided between the clinching element 3 and the vehicle body panel (not shown).

The portion of vehicle body panel (not shown) captivated between clinching element 3 and first side 21 of the flange 2 is deformed into the annular recess 23. The annular recess 23 helps provide a flush finish on the side of the vehicle body panel (not shown) opposite that adjacent the abutment surface 24.

Further, the application of the pressing force results in the longitudinally extending ribs 33 engaging inside the rim of the opening and the radially extending ribs 25 engaging the vehicle body panel (not shown) behind the opening. Such engagement inhibits rotation of the fluid drain connector 1 relative to the vehicle body panel (not shown).

Additionally, although the diameter of the internal bore described by of each flange 2, clinching element 3, tubular shaft 4 and hose connector 5 is described as being equal, this need not be the case. One or more of the flange 2, clinching element 3, tubular shaft 4 and hose connector 5 may have a different diameter internal bore so as to describe an internal step within bore B. For example, there may be a step in the bore B described between the flange 3 and tubular shaft 4.

Although the fluid drain connector 1 is described as having anti-rotation lock features in the form of six radially extending ribs 25 and six longitudinally extending ribs 33, this need not be the case. The fluid drain connector 1 may be provided with any suitable number of radially extending ribs and/or longitudinally extending ribs. The fluid drain connector 1 may be provided with only radially extending ribs or only longitudinally extending ribs.

Referring to Figure 4 a vehicle V is shown which may comprise the fluid drain connector 1 of any of the discussed embodiments.

## Claims

1. A fluid drain connector (1) for a vehicle, the fluid drain connector (1) comprising a flange (2) portion having a clinching element (3) to a first side thereof and a hose connector (1) extending from a second side thereof, the fluid drain connector (1) having a generally tubular body, wherein the clinching element (3) comprises a deformable region arranged to plastically deform outwardly under the influence of force so as to clinch a portion of a vehicle body panel between the flange (2) portion and clinching element (3);
wherein the fluid drain connector (1) comprises one or more anti-rotation lock features (25, 33) on an external surface of the clinching element (3) or on a panel facing side of the flange (2), the one or more anti-rotation lock features (25, 33) arranged to engage a vehicle body panel.

2. A fluid drain connector (1) according to claim 1, wherein the hose connector (1) comprises a push-fit or hose-tail type connector (1).

3. A fluid drain connector (1) according to claim 1 wherein the clinching element (3) is a clinch ring, the clinch ring arranged to be inserted within an opening of a vehicle body panel and clinched towards the flange (2) such that a portion of the body panel is captivated therebetween optionally wherein the clinch ring is arranged to engage behind the rim of the opening in the body panel.

4. A fluid drain connector (1) according to any preceding claim wherein the one or more anti-rotation lock features (25, 33) comprise one or more ribs or notches for engaging a cooperating portion of a vehicle body panel so as to resist relative rotation between the fluid drain connector (1) and vehicle body panel.

5. A fluid drain connector (1) according to any preceding claim wherein at least a portion of a panel facing side of the flange (2) comprises an annular recess (23) surrounding the clinching element (3) so as to describe an undercut, wherein the clinching element (3) is arranged to deform part of the vehicle body panel into the undercut.

6. A fluid drain connector (1) according to any preceding claim wherein the body is formed integrally.

7. A fluid drain connector (1) according to any preceding claim formed from metal.

8. A fluid drain connector (1) according to any preceding claim wherein the hose connector (1) has an opening which is between 3mm and 10mm in diameter.

9. A vehicle body panel comprising a fluid drain connector (1) according to any preceding claim wherein the fluid drain connector (1) and vehicle body panel form a water-tight seal therebetween and optionally the clinching element (3) lies substantially flush with a surface of the body panel when the fluid drain connector (1) is attached thereto.

10. A vehicle comprising a fluid drain connector (1) according to any one of claims 1 to 8 or a vehicle body panel according to claim 9.

11. A vehicle drain assembly comprising one or more fluid drain connectors (1) according to any one of claims 1 to 8.

12. A method of attaching a fluid drain connector (1) according to any one of claims 1 to 8 to a vehicle body panel; the method comprising inserting the clinching element (3) through an opening in the vehicle body panel, applying a pressing force to the fluid drain connector (1) so as to plastically deform the clinching element (3) towards the flange (2) such that a portion of the vehicle body panel is captivated between the flange (2) and the clinching element (3).

13. A method according to claim 12 comprising stamping or pressing the vehicle body panel and applying a pressing force to the fluid drain connector (1) concurrently.

14. A method according to claim 12 or claim 13, wherein deforming the clinching element (3) comprises at least partially embedding the clinching element (3) within the vehicle body panel such that the clinching element (3) lies substantially flush with a surface of the vehicle body panel.

## Patentansprüche

1. Fluidablaufverbinder (1) für ein Fahrzeug, der Fluidablaufverbinder (1) umfassend einen Flansch(2)-Abschnitt, der ein Clinchelement (3) an einer ersten Seite davon und einen Schlauchverbinder (1), der sich von einer zweiten Seite davon erstreckt, aufweist, wobei der Fluidablaufverbinder (1) einen im Allgemeinen rohrförmigen Körper aufweist, wobei das Clinchelement (3) einen verformbaren Bereich, der angeordnet ist, um sich unter Krafteinwirkung nach außen plastisch zu verformen, umfasst, um einen Abschnitt einer Karosseriewand zwischen dem Flansch(2)-Abschnitt und dem Clinchelement (3) zu clinchen;
wobei der Fluidablaufverbinder (1) ein oder mehrere Verdrehsicherungsmerkmale (25, 33) auf einer Außenoberfläche des Clinchelements (3) oder auf einer wandzugewandten Seite des Flansches (2) umfasst, wobei das eine oder die mehreren Verdrehsicherungsmerkmale (25, 33) angeordnet sind, um eine Karosseriewand in Eingriff zu nehmen.

2. Fluidablaufverbinder (1) nach Anspruch 1, wobei der Schlauchverbinder (1) einen Verbinder mit Schiebepassung oder einen Schlauch-Endstückverbinder (1) umfasst.

3. Fluidablaufverbinder (1) nach Anspruch 1, wobei das Clinchelement (3) ein Clinch-Ring ist, wobei der Clinch-Ring angeordnet ist, um innerhalb einer Öffnung einer Karosseriewand eingesetzt und in Richtung des Flansches (2) geclinched zu werden, derart, dass ein Abschnitt der Karosseriewand dazwischen festgehalten wird, optional wobei der Clinch-Ring angeordnet ist, um hinter den Rand der Öffnung in der Karosseriewand einzugreifen.

4. Fluidablaufverbinder (1) nach einem der vorstehenden Ansprüche, wobei das eine oder die mehreren Verdrehsicherungsmerkmale (25, 33) eine oder mehrere Rippen oder Kerben zum Ineingriffnehmen eines entsprechenden Abschnitts einer Karosseriewand umfassen, um einer relativen Drehung zwischen dem Fluidablaufverbinder (1) und der Karosseriewand entgegenzuwirken.

5. Fluidablaufverbinder (1) nach einem der vorstehenden Ansprüche, wobei mindestens ein Abschnitt einer wandzugewandten Seite des Flansches (2) eine ringförmige Aussparung (23), die das Clinchelement (3) umgibt, umfasst, um eine Hinterschneidung zu beschreiben, wobei das Clinchelement (3) angeordnet ist, um einen Teil der Karosseriewand in die Hinterschneidung hinein zu verformen.

6. Fluidablaufverbinder (1) nach einem der vorstehenden Ansprüche, wobei die Karosserie einstückig ausgebildet ist.

7. Fluidablaufverbinder (1) nach einem der vorstehenden Ansprüche, der aus Metall ausgebildet ist.

8. Fluidablaufverbinder (1) nach einem der vorstehenden Ansprüche, wobei der Schlauchverbinder (1) eine Öffnung mit einem Durchmesser zwischen 3 mm und 10 mm aufweist.

9. Karosseriewand, umfassend einen Fluidablaufverbinder (1) nach einem der vorstehenden Ansprüche, wobei der Fluidablaufverbinder (1) und die Karosseriewand eine wasserdichte Abdichtung dazwischen ausbilden und optional das Clinchelement (3) im Wesentlichen bündig mit einer Oberfläche der Karosseriewand liegt, wenn der Fluidablaufverbinder (1) daran befestigt ist.

10. Fahrzeug, umfassend einen Fluidablaufverbinder (1) nach einem der Ansprüche 1 bis 8 oder eine Karosseriewand nach Anspruch 9.

11. Fahrzeugablaufbaugruppe, umfassend einen oder mehrere Fluidablaufverbinder (1) nach einem der Ansprüche 1 bis 8.

12. Verfahren zum Befestigen eines Fluidablaufverbinders (1) nach einem der Ansprüche 1 bis 8 an einer Karosseriewand, das Verfahren umfassend das Einsetzen des Clinchelements (3) durch eine Öffnung in der Karosseriewand, ein Ausüben einer Druckkraft auf den Fluidablaufverbinder (1), um das Clinchelement (3) in Richtung des Flansches (2) plastisch zu verformen, derart, dass ein Abschnitt der Karosseriewand zwischen dem Flansch (2) und dem Clinchelement (3) festgehalten wird.

13. Verfahren nach Anspruch 12, umfassend ein Stanzen oder Pressen der Karosseriewand und das Ausüben einer Presskraft auf den Fluidablassverbinder (1).

14. Verfahren nach Anspruch 12 oder 13, wobei das Verformen des Clinchelements (3) ein mindestens teilweises Einbetten des Clinchelements (3) innerhalb der Karosseriewand umfasst, derart, dass das Clinchelement (3) im Wesentlichen bündig mit einer Oberfläche der Karosseriewand liegt.

## Revendications

1. Raccord de vidange de fluide (1) pour un véhicule, le raccord de vidange de fluide (1) comprenant une partie bride (2) avec un élément de serrage (3) sur un premier côté associé et un raccord de tuyau (1) s'étendant à partir d'un second côté associé, le raccord de vidange de fluide (1) ayant un corps généralement tubulaire, dans lequel l'élément de serrage (3) comprend une région déformable conçue pour se déformer plastiquement vers l'extérieur sous l'influence d'une force de manière à serrer une partie d'un panneau de carrosserie de véhicule entre la partie bride (2) et l'élément de serrage (3) ;
dans lequel le raccord de vidange de fluide (1) comprend une ou plusieurs fonctionnalités de verrouillage anti-rotation (25, 33) sur une surface externe de l'élément de serrage (3) ou sur un côté de la bride (2) faisant face au panneau, la ou les fonctionnalités de verrouillage anti-rotation (25, 33) étant conçues pour venir en prise dans un panneau de carrosserie de véhicule.

2. Raccord de vidange de fluide (1) selon la revendication 1, dans lequel le raccord de tuyau (1) comprend un raccord à emboîtement ou un raccord de type à queue de tuyau (1).

3. Raccord de vidange de fluide (1) selon la revendication 1, dans lequel l'élément de serrage (3) est un anneau de serrage, l'anneau de serrage étant conçu pour être inséré à l'intérieur d'une ouverture d'un panneau de carrosserie de véhicule et serré contre la bride (2) de telle sorte qu'une partie du panneau de carrosserie est saisie entre les deux, éventuellement, dans lequel l'anneau de serrage est conçu pour venir en prise derrière le bord de l'ouverture dans le panneau de carrosserie.

4. Raccord de vidange de fluide (1) selon l'une quelconque revendication précédente, dans lequel la ou les fonctionnalités de verrouillage anti-rotation (25, 33) comprennent une ou plusieurs nervures ou encoches pour venir en prise dans une partie coopérante d'un panneau de carrosserie de véhicule afin d'empêcher une rotation relative entre le raccord de vidange de fluide (1) et le panneau de carrosserie de véhicule.

5. Raccord de vidange de fluide (1) selon l'une quelconque revendication précédente, dans lequel au moins une partie du côté de la bride (2) faisant face au panneau comprend un renfoncement annulaire (23) entourant l'élément de serrage (3) de manière à décrire une contre-dépouille, dans lequel l'élément de serrage (3) est conçu pour déformer une partie du panneau de carrosserie de véhicule dans la contre-dépouille.

6. Raccord de vidange de fluide (1) selon l'une quelconque revendication précédente, dans lequel le corps est formé d'un seul tenant.

7. Raccord de drainage de fluide (1) selon l'une quelconque revendication précédente, formé en métal.

8. Raccord de vidange de fluide (1) selon l'une quelconque revendication précédente, dans lequel le raccord de tuyau (1) a une ouverture dont le diamètre est compris entre 3 mm et 10 mm.

9. Panneau de carrosserie de véhicule comprenant un raccord de vidange de fluide (1) selon l'une quelconque des revendications précédentes, dans lequel le raccord de vidange de fluide (1) et le panneau de carrosserie de véhicule forment un joint étanche entre eux et, éventuellement, l'élément de serrage (3) affleure sensiblement une surface du panneau de carrosserie lorsque le raccord de vidange de fluide (1) y est fixé.

10. Véhicule comprenant un raccord de vidange de fluide (1) selon l'une quelconque des revendications 1 à 8 ou un panneau de carrosserie de véhicule selon la revendication 9.

11. Ensemble de vidange de véhicule comprenant un ou plusieurs raccords de vidange de fluide (1) selon l'une quelconque des revendications 1 à 8.

12. Procédé permettant de fixer un raccord de vidange de fluide (1), selon l'une quelconque des revendications 1 à 8, à un panneau de carrosserie de véhicule ; le procédé comprenant l'insertion de l'élément de serrage (3) à travers une ouverture dans le panneau de carrosserie de véhicule, l'application d'une force de pression sur le raccord de vidange de fluide (1) de manière à déformer plastiquement l'élément de serrage (3) vers la bride (2) de telle sorte qu'une partie du panneau de carrosserie de véhicule est saisie entre la bride (2) et l'élément de serrage (3).

13. Procédé selon la revendication 12, comprenant l'estampage ou le pressage du panneau de carrosserie de véhicule et l'application simultanée d'une force de pression sur le raccord de vidange de fluide (1).

14. Procédé selon la revendication 12 ou la revendication 13, dans lequel la déformation de l'élément de fixation (3) comprend, au moins partiellement, l'intégration de l'élément de fixation (3) dans le panneau de carrosserie de véhicule de telle sorte que l'élément de fixation (3) affleure sensiblement une surface du panneau de carrosserie de véhicule.
